# EUROPÄISCHE PATENTSCHRIFT

(11) **EP 2 400 239 B1**
(45) Veröffentlichungstag und Bekanntmachung des Hinweises auf die Patenterteilung: **10.10.2012**
(21) Anmeldenummer: 10005833.8
(22) Anmeldetag: 06.06.2010
(51) Int. Cl.: F24J 2/54, F16B 7/18, F16B 12/20, F24J 2/52, F16B 5/02

(54) **Verstellvorrichtung und Montagesystem**
Adjustment device and mounting system
Dispositif de réglage et système de montage

(43) Veröffentlichungstag der Anmeldung: 28.12.2011
(73) Patentinhaber: Montagebau Karl Göbel, 74613 Öhringen (DE)
(72) Erfinder: Göbel, Marco, 74613 Öhringen (DE); Göbel, Karl, 74613 Öhringen (DE)
(74) Vertreter: Wendels, Stefan

(56) Entgegenhaltungen:
- WO-A1-2006/013377
- DE-C- 584 887
- DE-U1- 9 308 196
- DE-U1-202007 004 083
- FR-A- 1 291 158
- GB-A- 2 099 879
- JP-A- 2007 146 435

## Beschreibung

Die Erfindung betrifft eine Verstellvorrichtung zum Verbinden und zur stufenlosen Höhen- oder Abstandsmontage zweier benachbarter Bauteile sowie ein Montage- und Befestigungssystem aus wenigstens zwei Bauteilen und wenigstens einer Verstellvorrichtung zum Verbinden und Justieren von wenigstens zwei der Bauteile.

Die Erfindung lässt sich allgemein auf dem Gebiet der baulichen Konstruktionen insbesondere Stahlbaukonstruktionen verwenden. Im Bereich der baulichen Konstruktionen kommen neben den klassischen Verbindungsmitteln auch unterschiedlichste Montagehilfen, Justagemittel und Verstellvorrichtungen zum Verbinden und exakten Ausrichten der verwendeten Montagebauteile zum Einsatz. Bei Konstruktionen die unter einem definierten Neigungswinkel errichtet werden müssen ist eine aufwändige und umständliche Montage gegeben. Je nach baulicher Bedingung ergeben sich spezifische für die Anwendung typische und immer wieder auftretende Probleme, die die Montage insgesamt erschwerten und damit einen erheblichen Einfluss auf die Bau- und Montagekosten nehmen. Die spezifischen Anforderungen und das Ausmaß der Schwierigkeiten bei der Montage von baulichen Konstruktionen hängt nicht selten auch unmittelbar von dem Kostenrahmen und der Größe der zu erstellenden Anlage ab. Hinzu treten weitere Einflussfaktoren wie Bodenbeschaffenheit und Umweltfaktoren wie beispielsweise Temperatureinflüsse.

Bei der Erstellung klassischer Stahlbauten treten besonders häufig Schwierigkeiten bei der Errichtung von energiegewinnenden Anlagen wie Photovoltaikanlagen (PV-Anlagen) und dort insbesondere bei der Errichtung sogenannter Freilandanlagen (kurz: PV-Freilandanlage) auf.

Montagesysteme für PV-Anlagen sind aus dem Stand der Technik hinreichend bekannt. Derartige Systeme bestehen regelmäßig aus einem Rahmensystem, an dem die plattenförmige Module angeordnet werden und gegebenenfalls aus einer Unterkonstruktion, sofern das Rahmensystem nicht unmittelbar mit Dachhaken, Sparrenankern oder Dreieckstützen an den Sparren des Daches befestigt werden. Bei Aufdachanlagen und Freilandanlagen werden dagegen Unterkonstruktionen verwendet.

Als Freilandanlage werden ganz allgemein solche Anlagen bezeichnet, die auf großen Freiflächen wie z.Bsp. Äcker, Wiesen oder landwirtschaftlich ungenutzten Flächen gegründet werden und die damit ein konstruktives Gerüst für PV-Module unterschiedlichster Art und Ausführung benötigen. Dabei wird typischerweise eine Pfosten-Riegel-Konstruktion aus Stützen und Streben in einem durch den Bauplaner und in Abhängigkeit der Baustatik und den Bodenbedingungen ermittelten Montageraster verwendet und die Konstruktion entweder auf losen oder befestigten Fundamenten gegründet oder alternativ werden die Stütz/Tragpfosten unmittelbar im Boden verankert. Im Stand der Technik sind für die zuletzt genannte Anwendung dabei typischerweise zwei unterschiedliche Methoden bekannt. Entweder wird eine Rammpfostenmontage ausgeführt oder alternativ auf Freilandgestelle montiert, bei denen sogenannte Modultische wahlweise auf Fundamenten oder auch auf temporären Verankerungen wie Eindrehankern befestigt werden.

Die Rammpfostenmontage ermöglicht die schnelle und damit wirtschaftliche, sogar rückbauende Errichtung größerer Freilandanlagen mit allen gängigen kristallinen PV-Modulen. Dabei werden Stützpfosten oder ganz allgemein Pfosten mittels eines maschinellen Rammens in eine durch den Statiker und Bodengutachter ermittelte Tiefe in den Boden gerammt.

Im Stand der Technik ist zum Beispiel als Rammpfostensystem das Montagesystems MSE 210 zur Errichtung von großen Freilandanlagen bekannt. Die jeweils vordimensionierten Einheiten für ca. 10 bzw. 12 Module können mit einer unterschiedlichen Neigung von 10°, 20°, 30° oder 40° aufgebaut werden. Hierzu ist es erforderlich, dass ein exaktes Rammen der entsprechenden Stützpfosten vorgenommen wird, was aufwendig und kompliziert ist.

Zusätzliche Schwierigkeiten ergeben sich durch unebene Bodenverhältnisse, Hanglagen und besondere Bodenbedingungen im Allgemeinen. Es ist jedenfalls erforderlich eine Montageebene oder Konstruktionsebene für die PV-Module über große Bereiche reproduzierbar zu errichten. Werden dabei eine Vielzahl von z.Bsp. Rammpfosten verwendet, so liegt im Normalfall das obere Montageende und damit das Befestigungsende der Rammpfosten für die daran anzubringenden Montagestreben und Riegel nicht oder nahezu nie exakt auf dem gewünschten Niveau. Dabei treten unerwünschte Lagedifferenzen auf. Bei einer Vielzahl von Rammungen multipliziert sich bedingt durch die relative Höhenabhängigkeit der Pfosten zueinander dieser Effekt noch.

Hinzu treten noch die weiteren systembedingten Toleranzprobleme, insbesondere der Einfluss der Form- und Lagetoleranzen und Eigenschaften der weiteren verwendeten Materialen, die es zu berücksichtigen gilt. So werden typischerweise Aluminiumkonstruktionen und Profilschienen als PV-Modulkonstruktionen auf die Stahlunterkonstruktion aufgebracht, um einen Aufnahmerahmen für die spannungsfreie Lagerung der PV-Module zu schaffen.

Hierbei sind zwingend weitere Toleranzen und unterschiedliche Längenausdehnungskoeffizienten zu berücksichtigen. Im Stand der Technik haben sich dabei unterschiedliche Lösungen ausgebildet, um die fertigungs- und montagebedingten Höhen- und Abstandstoleranzen in der Montage auszugleichen, somit einen Höhen- oder Abstandsausgleich zu schaffen. Im Allgemeinen werden Montageadapter, Kopfplatten, Verstellvorrichtungen oder verstellbare Distanzbleche verwendet, um die Differenzen auszugleichen.

So ist aus der DE 202009011317 U ein Montagesystem zur Erstellung einer Unterkonstruktion vornehmlich zur Freilandmontage bekannt, bestehend aus einem Rahmen an dem zumindest ein plattenförmiges Modul angeordnet werden kann, wobei der Rahmen mittels eines höhenverstellbaren Befestigungsmittel in seiner Höhe justierbar und anbringbar ist und wobei das Befestigungsmittel hierzu über eine Verzahnung in einem definierten Zahnraster verfügt in welche korrespondierende Zähne des Rahmensystems eingreifen können, so dass eine jedenfalls im Abstand der Zähne mögliche Höhenjustage erfolgen kann.

Weiter ist aus der DE 102005040368 A1 eine Vorrichtung zum Befestigen eines Bauteils auf einem Montageträger unter einem definierten Neigungswinkel bekannt, wobei die Vorrichtung ein Befestigungselement und ein Gewindestück umfasst und das bogenförmige Befestigungselement mit einer entsprechenden bogenförmigen Ausnehmung ausgestattet ist gegen dessen Innenseite ein konvexes Gewindestück gelagert ist. Dadurch lässt sich der Neigungswinkel des Bauteils auf dem Montageträger justieren.

Die DE 10246935 A1 offenbart ein weiteres Montage- und Befestigungssystem zur Befestigung von Solarkollektoren oder Solarzellen von geneigten Dächern, bestehend aus Dachankern, Dachschienen und einer Ausgleichschiene die es derart ermöglicht, dass das Befestigungssystem durch einstellbare Höhenebenen des Dachankers und/oder der Ausgleichschiene für eine bestimmte Höhenebene angepasst werden kann.

Nachteiligewirken sich bei den im Stand der Technik genannten Ausführungen deren Komplexität und Kosten aus. Diese sind einerseits aufwendig und teuer in der Herstellung und Montage und erfüllen auch nicht ohne weiteres die besonderen statischen und technischen Anforderungen.

Im Stand der Technik sind mit den Druckschriften DE 102006015751, DE 8222977 U, DE 29913904 U und DE 20113359 U weitere Offenbarungen von Haltesystemen, Montagevorrichtungen und Befestigungssystemen zur Anpassung besagter Systeme bekannt. Die Druckschrift DE 20 2007 004 083 U zeigt die Merkmale des Oberbegriffs von Anspruch 1.

Die hohen Präzisionsanforderungen sind aber selbst bei einer modular anreihbaren Unterkonstruktion ein zusätzlicher Kostenfaktor, insbesondere wenn zusätzliche weitere Montageadapter oder Verbindungselemente benötigt werden. Als Grundbausteine für eine Unterkonstruktion werden hierbei typischerweise H- oder U-Profile verwendet, die auf den ersten Blick nicht so aussehen, als ob ihre Herstellung eine besondere Herausforderung darstellen würde. Erst bei näherer Betrachtung zeigt sich, dass der Teufel wie so oft im Detail steckt, denn ihre Toleranzen müssen so präzise austariert werden, dass sie auch nach dem Feuerverzinken und dessen thermischer Belastung bei der Montage weder klemmen noch zuviel Spiel haben.

Für ihre Außenabmessungen müssen daher spezielle Toleranzfelder definiert werden, für die es keinerlei verbindliche Normvorgaben gibt. Eine weitere wesentliche Forderung ist, dass Stützen und Riegel extrem gerade sein müssen und keinen Drall aufweisen dürfen. Hohe Anforderungen an die Passgenauigkeit gelten auch bezüglich der Bohrungen für die Verschraubungen. Solche Anforderungen bringen zwangsläufig erhebliche Probleme mit sich, wenn mit unterschiedslos auf dem Markt zusammengekauften Komponenten gearbeitet wird.

Berücksichtigung muss dabei auch der Umstand finden, dass keine speziellen baurechtlichen Normen oder Statiken für PV-Konstruktionen existieren und somit keine spezifischen und allgemeinverbindlichen Berechnungsgrundlagen für PV-Unterkonstruktionen und deren Verbindungsmittel existieren. Es werden daher entsprechende Statiknormen aus ähnlichen Konstruktionen herangezogen und daher auf Normen aus dem Hoch- und Stahlbau zurückgegriffen, welche beispielsweise die Wind- und Schneelasten und damit Zug- und Scherkräfte einer Freiland-PV-Anlage entsprechend berücksichtigen. So sind nur beispielhaft die in der Statik bekannte Lochleibung und die Selbsthemmung von Verbindungsmitteln zu berücksichtigen.

Als Selbsthemmung wird in der Mechanik der durch Reibung verursachte Widerstand gegen ein Verrutschen oder ein Verdrehen zweier aneinander liegender Körper bezeichnet. Sobald die Haftreibung überschritten ist, sind die Körper nicht mehr selbsthemmend und das Verbindungsmittel bzw. die beteiligten Reibkörper können gegeneinander Verrutschen.

Die Selbsthemmung zwischen zwei Körper wird durch mehrere Faktoren beeinflusst. So wird diese durch den Neigungswinkel, die Oberflächenrauigkeit der Auflageflächen, der Werkstoffpaarung, der Gleitgeschwindigkeit, durch Schmierstoffe und die Erwärmung beeinflusst. Um Selbsthemmung zu erreichen, wird der resultierende Winkel kleiner als der Arcustangens der Haftreibungszahl ausgeführt.

Aufgabe der vorliegenden Erfindung ist es daher unter der Berücksichtigung der spezifischen statischen Randbedingungen genannte Nachteile zu beseitigen und eine Verstellvorrichtung und ein Montagesystem bereitzustellen, welche kostengünstig zu fertigen, einfach zu handhaben und zu montieren sind und systembedingte Toleranzen insbesondere Höhenunterschiede stufenlos ausgleichen können.

Die Aufgabe der vorliegenden Erfindung wird gelöst durch die Merkmale der Ansprüche 1 sowie durch die Merkmale des Anspruch 8.

Erfindungsgemäß wird daher eine Verstellvorrichtung zum Verbinden und zur stufenlosen Höhen- oder Abstandsjustage zweier mit Befestigungsöffnungen versehener benachbarter Bauteile mittels gemeinsamer Verbindungsmittel mit dem Merkmalen von Anspruch 1vorgeschlagen, die in einer besonders bevorzugten Ausgestaltung aus einer plattenförmigen Scheibe besteht, die über eine Öffnung für ein erstes Verbindungsmittel und eine Ausnehmung für ein zweites Verbindungsmittel verfügt und wobei die Ausnehmung als eine spiralförmige Ausnehmung in der Scheibe ausgebildet ist und die Öffnung innerhalb des Zentrums der spiralförmigen Ausnehmung angeordnet ist.

Die Führungsbahn der spiralförmigen Ausnehmung definiert dabei eine Abstandskurve von einem minimalen Absand A₁ zu einem maximal möglichen Abstand A₂ Verbindungsmittel, von denen eines in der zentralen Öffnung und ein zweites in entsprechender Position in die Ausnehmung eingebracht werden kann. Durch die sich nach Außen "öffnende" Verlauf der Ausnehmung lässt sich der Abstand der beiden Verbindungsmittel hierdurch stufenlos einstellen durch einfaches Verdrehen der Scheibe in die entsprechende Position mit dem gewünschten Abstand.

Die im wesentlichen im Zentrum der Spirale eingebrachte Öffnung ist vorzugsweise als eine Bohrung ausgeführt für die gemeinsame Befestigung von mindestens einem Bauteil wie z.Bsp. einer Stütze und vorzugsweise einem benachbarten weiteren Bauteile wie z.Bsp. einem Riegel, die über jedenfalls teilweise korrespondierende Befestigungslöcher verfügen zur gemeinsamen Verbindung. Durch das Verdrehen der Scheibe lässt sich der Abstand der Verbindungsmittel und damit der Abstand der Bauteile justieren.

In einer Vormontagestellung lässt sich die Scheibe entsprechend um die zentrale Bohrung zumindestens teilweise drehen, solange die Verbindungsmittel nur unvollständig an der Verstellvorrichtung befestigt sind. Dabei wird unter Vormontagestellung eine Stellung betrachtet, bei der die Verbindungsmittel nur teilweise montiert sind und dadurch eine drehende und verschiebende Bewegung der beteiligten Verbindungsteile zumindestens teilweise möglich ist.

Die Endmontagestellung beschreibt hingegen den Zustand, bei denen die an einem Verbindungspunkt beteiligten Bauteile infolge der mechanischen Arretierung z.B. durch das vollständige Anziehen einer oder zweier verwendeter Schrauben die zu verbindenden Bauteile nicht mehr gegeneinander bewegt oder verdreht werden können.

Die Ausnehmung in der Scheibe für das zweite Verbindungsmittel kann dabei als ein bogenförmiger oder spiralförmiger Schlitz in einer Schlitzbreite Bₛ oder als ein spiralförmiges Langloch mit einer Langlochbreite Bₛ ausgebildet sein und das Langloch über eine innere Langlochseitenkante und einer äußeren Langlochseitenkante verfügen, deren Abstand die Langlochbreite Bₛ bestimmt, die vorzugsweise dem Durchmesser des Verbindungsmittels in etwa entspricht. Hierdurch kann neben dem durch die zentrale Öffnung eingeführten ersten Verbindungsmittel ein zweites Verbindungsmittel in einem Abstand zwischen A₁ und A₂ durch das Langloch hindurchgeführt werden. Wird an den zu verbindenden Bauteilen an wenigstens einem der Bauteile neben einer Öffnung für das zentrale Verbindungsmittel noch ein Langloch in korrespondierendem Abstand A1 in entsprechender Orientierung angebracht, so lässt sich durch das Hin- und Herdrehen der Scheibe das zweite Verbindungsmittel relativ zum ersten Verbindungsmittel innerhalb der Ausnehmung zwangsführen und dessen Abstand einstellen. Demzufolge wird auch der Abstand der beteiligten Bauteile zwangsweise mit verändert.

In einer bevorzugten Ausgestaltung ist die zentrale Öffnung als ein Loch mit Lochdurchmesser D_{L} ausgebildet und liegt dessen Lochmittelpunkt M_{L} im Polpunkt der spiralförmigen Ausnehmung.

Um die Verstellvorrichtung einfach und bequem verdrehen zu können sind ferner vorzugsweise mindestens eine Werkzeugeingriffausnehmung zum Eingriff eines Drehwerkzeuges in oder an der Scheibe vorgesehen, um die Verstellvorrichtung in und entgegen dem Uhrzeigersinn mittels des passenden Werkzeugs drehen zu können.

Erfindungsgemäß ist die spiralförmige Ausnehmung in der Form einer logarithmischen Spirale ausgebildet. Eine logarithmische Spirale ist eine solche Spirale, die mit jeder Umdrehung den Abstand von ihrem Mittelpunkt, dem Pol, um den gleichen Faktor vergrößert. In umgekehrter Drehrichtung schlingt sich die Kurve mit abnehmendem Radius immer enger um den Pol. In Polarkoordinaten ausgedrückt, bestimmt sich der Abstand vom Mittelpunkt in Abhängigkeit vom Polarwinkel ϕ nach eine Exponentialfunktion, bei der der Exponent vom Polarwinkel und der konstanten Steigung k definiert wird. Der Steigungswinkel s der spiralförmigen Ausnehmung ist dabei entsprechend den Erfordernissen nach der Gleichung r (ϕ) ≅ s x exp (kϕ) anpassbar. Hierdurch wird sichergestellt, dass sich der Krümmungsradius der Spirale von jedem Spiralpunkt zum benachbarten Spiralpunkt identisch ändert und damit an allen Montagepositionen der Ausnehmung die gleiche geometrische Winkelbedingung zwischen dem verwendeten Verbindungsmittel und dessen Anlage-Tangente an dem entsprechenden Anlagepunkt und dessen Anlage-Tangente an der vorzugsweise inneren Innenkante der Ausnehmung vorliegt.

Diese geometrische Situation bedingt eine Selbsthemmung zwischen dem Verbindungsmittel wie z.Bsp. einer Schraube und der Verstellvorrichtung, so dass ein unbeabsichtigtes Verdrehen der Verstellvorrichtung im Endmontagezustand gegen die Schraube verhindert wird und damit die für die Statik wichtige Selbsthemmung erfüllt wird oder anders ausgedrückt kann dadurch immer der gleiche Reibwinkel α zwischen dem Verbindungsmittel und der Ausnehmungsinnenkante erzielt werden, so dass dadurch in jeder Montageposition die Bedingung einer Selbsthemmung erzielbar ist. In einer besonderen Ausführungsform ist der Reibwinkel α kleiner als 11° und mit Vorteil etwa 8 bis 11°. Bei Verwendung von Stahl oder feuerverzinktem Stahl sollte der Wert nahe bei 11° liegen.

Die Verstellvorrichtung stellt mit der spiralförmigen Ausnehmung daher neben der selbsthemmenden Kurve gleichzeitig eine Steuerkurve für die Lageverschiebung eines Verbindungsmittel bereit. Beim Drehen der Verstellvorrichtung kann durch die von der Ausnehmung gebildete Steuerkurve eine vom Drehwinkel abhängige relative Lageverschiebung der Verbindungsmittel erreicht werden.

Mit Vorteil ist die Verstellvorrichtung als eine kreisförmige Scheibe ausgebildet in der die zentrale Öffnung und damit der Pol der Spirale vom Kreismittelpunkt versetzt angeordnet ist. Hierdurch kann eine optimale Materialausnutzung erzielt werden.

Weiterhin schlägt die vorliegende Erfindung ein Montagesystem mit den Merkmalen von Anspruch 8 vor.

Die Befestigungsöffnungen in den Bauteilen sind so vorzunehmen und auszubilden, dass Freiheitsgrade und damit ein Abstandsspiel für die Bewegung bzw. Verlagerung der Verbindungsmittel und der Bauteile besteht.

In einer bevorzugten Ausgestaltung der Erfindung werden dazu in wenigstens einem der beiden Bauteile ein Rundloch und ein Langloch so in ihrer Orientierung zueinander angeordnet, dass beim Verdrehen der Verstellvorrichtung die beiden Verbindungsmittel die unmittelbar damit verbundenen Bauteile zueinander in ihrer relativen Lage bestimmungsgemäß verschieben womit der Abstand der beiden Verbindungsmittel veränderbar bzw. einstellbar ist. Der Abstand und die Orientierung sowie die Länge der Befestigungsöffnungen kann dabei auf den jeweiligen Anwendungsfall angepasst werden.

Weitere Ausgestaltungen der Erfindung ergeben sich aus der Figurenbeschreibung und den Ansprüchen, wobei die genannten Ausführungsbeispiele dabei nicht einschränkend zu betrachten sind.

Die Figuren der Zeichnungen zeigen unter Beibehaltung gleicher Bezugszeichen für gleiche Bauteile im Einzelnen:
- Fig. 1:: Perspektive Explosionsdarstellung eines Montagesystems
- Fig. 2:: Eine Detailansicht D gemäß Figur 1
- Fig. 3:: Perspektive Explosionsdarstellung einer alternativen Ausführungsform des Montagesystems
- Fig. 4:: Die erfindungsgemäße Verstellvorrichtung in unterschiedlichen Positionen
- Fig. 5:: Perspektive Explosionsdarstellung einer zusammen montierten Ausführungsform des Montagesystems sowie ein Detail E
- Fig. 6:: Perspektive Explosionsdarstellung einer weiteren zusammen montierten Ausführungsform des Montagesystems sowie ein Detail A
- Fig. 7:: Alternative Ausführung der Langlochposition

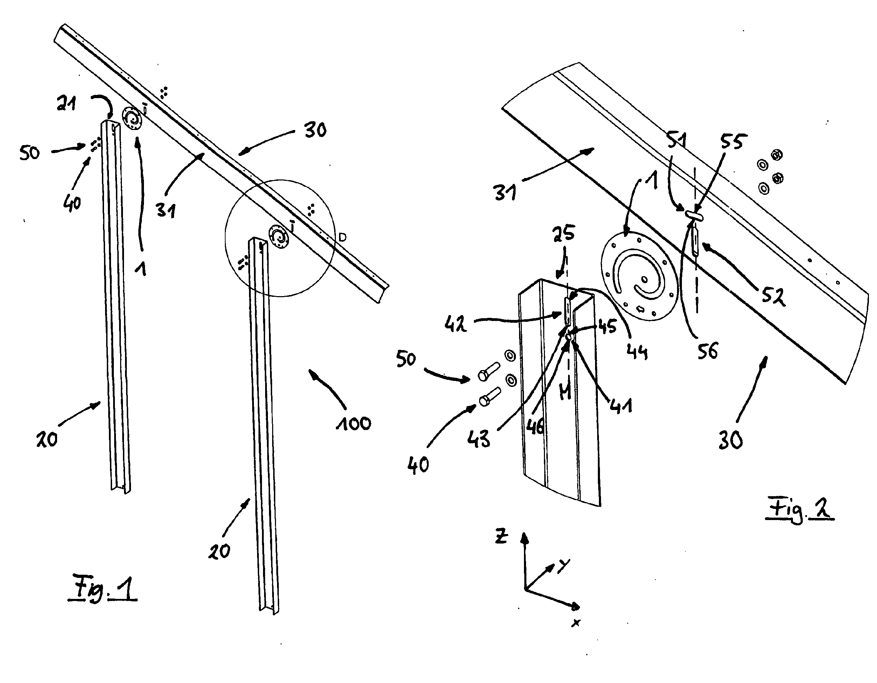

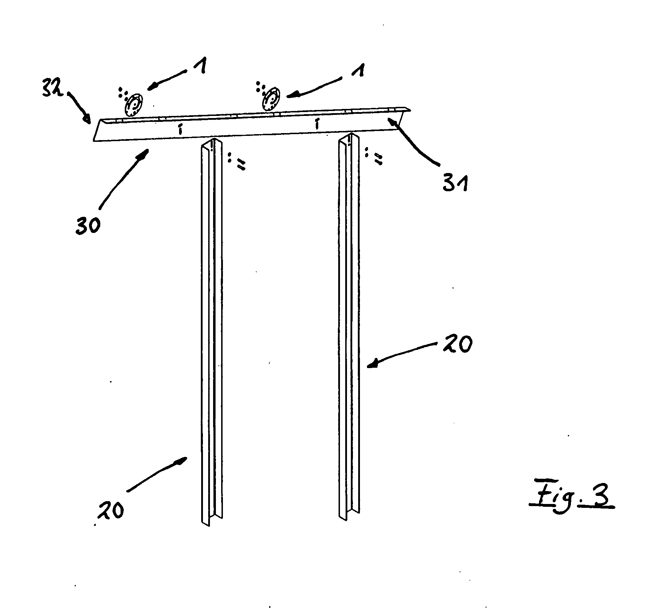

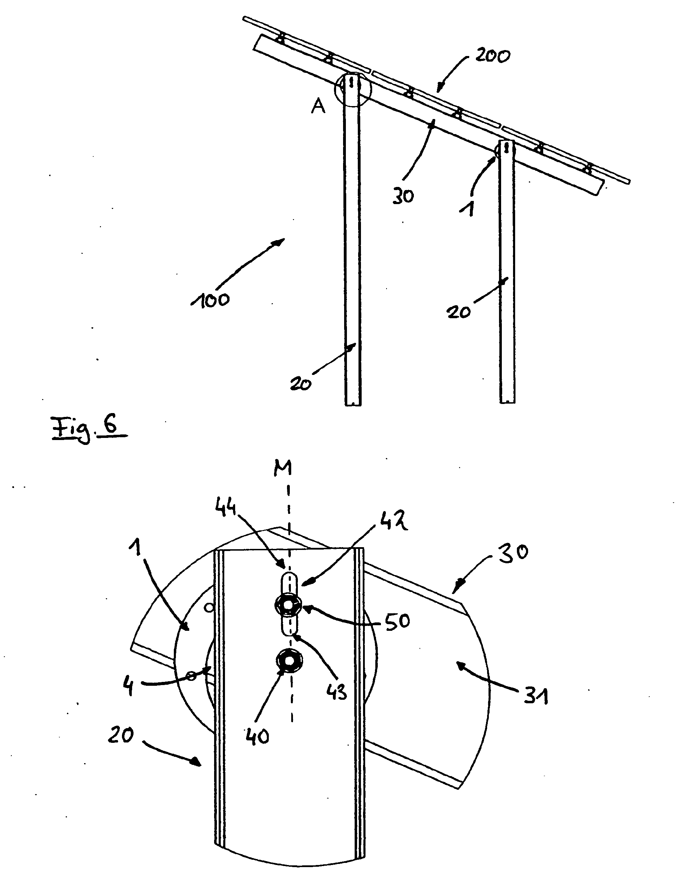

Fig.1 zeigt eine perspektive Explosionsdarstellung eines Montagesystems 100 mit zwei Bauteilen 20, die als U-Profil-Stützen ausgebildet sind und einem daran zu befestigenden Bauteil 30 ausgebildet als U-Profil. Fig. 3 zeigt eine alternative Ausführungsform des zweiten Bauteils 30 ausgebildet als L-förmiges Profil. Jedes der beiden Bauteile 20,30 verfügt über mindestens eine Flachseite 21,31 zur anliegenden Montage mit der jeweils anderen Flachseite 21,31 des jeweils anderen Bauteils. Die scheibenförmige Verstellvorrichtung 1 kann dabei wahlweise wie in Fig.1 und Fig.6 dargestellt unmittelbar zwischen den beiden Bauteilen 20,30 oder wie in der Ausführungsform gemäß Fig.3 gezeigt alternativ an der der Flachseite 31 gegenüberliegenden Flachseite 32 des Bauteils 30 angeordnet werden.

Die Wirkungsweise bei den beiden Ausführungsformen der Montagesysteme 100 ist vergleichbar und kann daher für beide Ausführungsformen gemeinsam beschrieben werden. In Fig.2 ist ein Detail D gemäß Fig. 1 in einer noch nicht montierten Zusammenstellung gezeigt. In dieser Darstellung ist ersichtlich, dass in der Stütze 20 nahe dessen oberen Montageende 25 ein Langloch 42 mit einem oberen Langlochende 44 und einem unteren Langlochende 43 angeordnet ist. Die Orientierung des Langloches 42 in der Stütze lässt sich durch dessen Mittelachse M näher beschreiben. In der Fig.2 und der Fig. 6 verläuft das Langloch 42 mit seiner Langlochachse bzw. Mittelachse M parallel zur Längserstreckung der Stütze 20, somit in Z-Richtung gemäß der Darstellung in der Fig.2. Auf dessen Mittelachse M in einem Abstand A₁ zu dem Langloch 42 befindet sich eine Befestigungsöffnung 41 nahe dem unteren Langlochende 43. Die Befestigungsöffnung 41 bildet für das Verbindungsmittel 40 einen oberen Anschlag 45 und einen unteren Anschlag 46, so dass das Verbindungsmittel 50 in Achsrichtung M nach oben oder unten nur bis zur Anlage am oberen oder unteren Anschlag 45,46 ausweichen kann. Mit Vorteil wird ein kleines Achsspiel zwischen den Anschlägen 45,46 in Achsrichtung M für das Befstigungsmittel 40 dadurch erzielt, dass die Bohrung in ihrem Durchmesser auf den Außendurchmesser des Verbindungsmittels 40 z.B. einer Schraube angepaßt ist.

Im Folgenden wird die beschriebene Anordung der beiden Befestigungsöffnungen 41,42 kurz als Lochbild zur Höhenverstellung in Achsrichtung M bezeichnet. Die Orientierung des Langloches 42 und damit die Langlochachse M bestimmt die mögliche Verschieberichtung des Verbindungsmittels 50 relativ zum Verbindungsmittel 40 und damit auch die Verstellrichtung des zweiten Bauteils 30 zum ersten Bauteil 20. Das Verbindungsmittel 50 kann dabei von einer ersten Position im Bereich des unteren Langlochendes 43 somit einem ersten Abstand A₁ bis zu einer zweiten Position im Bereich des oberen Langlochendes 44 und somit einem zweiten Abstand A₂ bestimmungsgemäß verschoben werden.

Zwischen der Stütze 20 und dem Riegel 30, der hier als Querriegel 30 dargestellt ist, ist die erfindungsgemäße Verstellvorrichtung 1 anzuordnen. Der U-förmige Querriegel verfügt über ein zum Lochbild der Stütze 20 korrespondierendes Lochbild, welches in ihrer Montageposition jedoch um 180° gegenüber dem Lochbild in der Stütze 20 verdreht angeordnet ist. Somit ist das Langloch 52 unterhalb der Bohrung 51 in gleicher Orientierung wie das Langloch 42 angeordnet. In Fig. 2 ist alternativ statt der Bohrung 51 allerdings ein quer zum Langloch 52 orientiertes Langloch 51 eingebracht. Zur Funktionsweise ist es jedenfalls notwendig, dass die Befestigungsöffnung 51 einen in Achsrichtung M für das Verbindungsmittel 50 oberen Anschlag 55 und einen unteren Anschlag 56 bildet, so dass das Verbindungsmittel 50 in Achsrichtung M je nach Verschieberichtung nach oben oder unten in Anlage mit dem oberen oder unteren Anschlag 55,56 kommt, derart dass beim Verschieben des Verbindungsmittels 50, dieses das Bauteil 30 zwangsweise entsprechend mitbewegt.

Das Einstellen des relativen Abstands der beiden Bauteile 20,30 zueinander wird durch das Drehen der Verstellvorrichtung 1 gesteuert. Dadurch lassen sich Ungenauigkeiten bei der Montage, innerhalb einem Abstands-Intervall von A₁ bis A₂ in Achsrichtung M ausgleichen. Da die in den Figuren dargestellten Bauteile 20 als Stützen in Z-Richtung ausgebildet sind, lässt sich daher eine stufenlose Höhenjustage in z-Richtung durchführen.

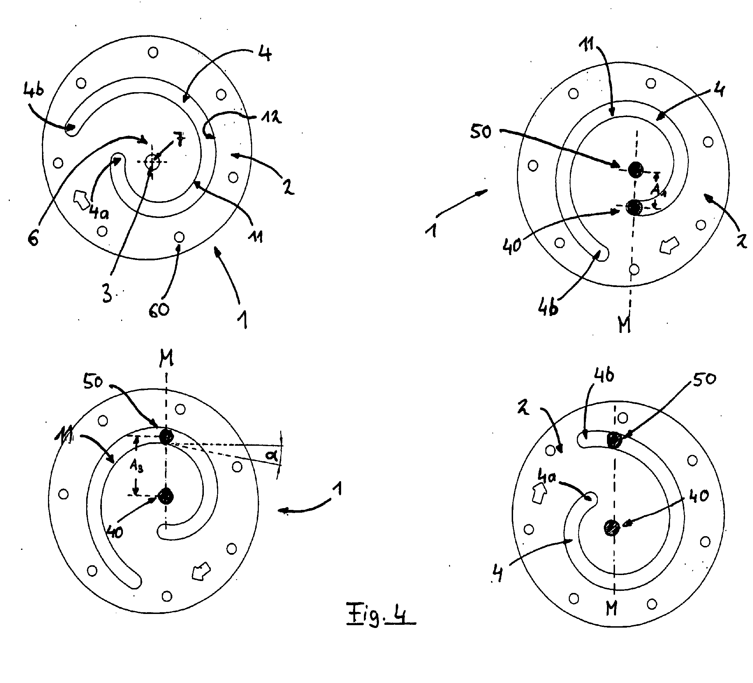

Die Verstellvorrichtung 1 ist in Fig. 4 näher beschrieben. Diese zeigt vier Positionen der Verstellvorrichtung 1. Die Verstellvorrichtung 1 ist als flache und runde Scheibe 2 mit einer Öffnung 3 etwas außerhalb des Kreis-Mittelpunktes ausgebildet. Die Scheibe 2 kann aber auch in jeder anderen geeignete Form ausgebildet sein. Die Öffnung 3 stellt ein Montageloch für das Verbindungsmittel 40 dar. Weiterhin verfügt die Scheibe 2 über eine spiralförmig angeordnete Ausnehmung 4 für das zweite Verbindungsmittel 50. Die spiralförmige Ausnehmung 4 ist als eine die Scheibe durchdringende Ausnehmung in Form eines spiralförmig gebogenen Langlochs ausgebildet. Das Langloch 4 verfügt über eine innere Langlochseitenkante 11 und eine äußere Langlochseitenkante 12. Die Bohrung 3 ist innerhalb des Zentrums 6 der spiralförmigen Ausnehmung 4 angeordnet. Umlaufend sind mehrere Löcher als Werkzeugeingriffsausnehmungen 60 angeordnet, um ein Drehwerkzeug zum drehenden Eingriff anzubringen. Mit Vorteil kann ein Richtungspfeil der Drehrichtung auf einer der beiden Seiten zur besseren Orientierung angebracht werden.

In der rechten oberen Ansicht der Fig.4 ist die Verstellvorrichtung 1 in einer Stellung gezeigt, in dem die Lage der Verbindungsmittel 40 und 50 eingezeichnet sind. Diese Position bestimmt die Lage der Verstellvorrichtung 1 in einer Montageposition, bei der der minimale Abstand A₁ eingestellt ist. Dabei befindet sich das Verbindungsmittel 50 am Anfangspunkt 4a des Langlochs 4.

In der linken unteren Ansicht der Fig.4 ist die Verstellvorrichtung 1 gegenüber der zuvor beschriebenen Stellung verdreht in einer mittleren Montageposition dargestellt. In dieser Stellung können Verbindungsmittel 40 und 50 in einem Abstand A₃ zueinander befestigt werden. Ersichtlich ist auch der Reibwinkel α zwischen den Tangenten an die Schraube 50 bzw. allgemein an das Verbindungsmittel 50 und die innere Langlochseitenkante 11. Vorliegend beträgt der Winkel ca. 11°.

Wird die Verstellvorrichtung 1 weiter gedreht, so kann die in der rechten unteren Ansicht der Fig.4 dargestellte Position erzielt werden. In dieser Position lässt sich ein vergrößerter Abstand der Verbindungsmittel 40 und 50 erzielen, wobei ein Weiterdrehen bis maximal zum Endpunkt 4b der Ausnehmung 4 möglich ist.

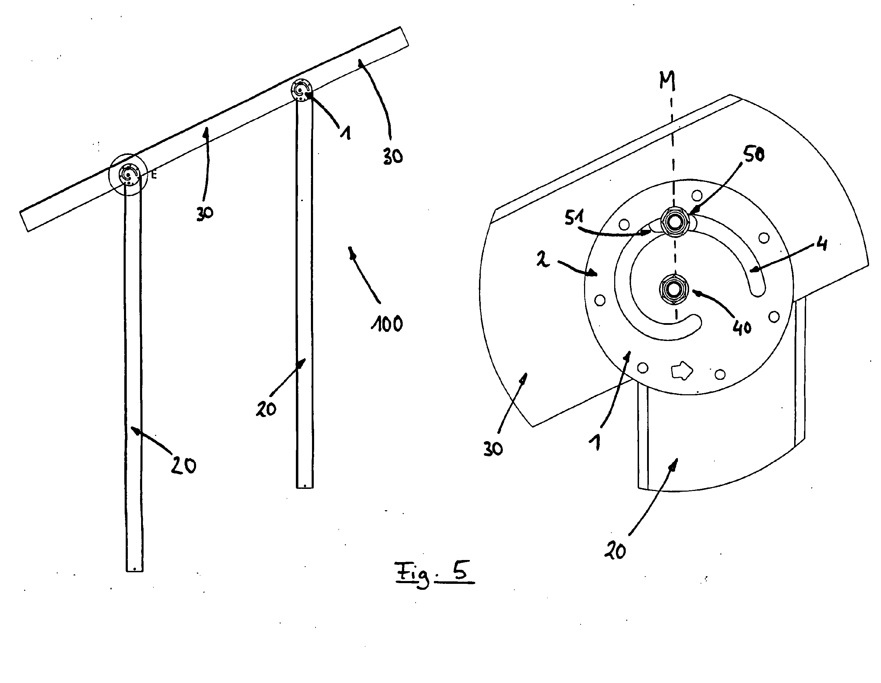

Fig. 5 zeigt eine Seitenansicht einen montierten Montagesystem 100 gemäß einer ähnlichen Ausführung wie in Fig.3 dargestellt. Dabei ist im rechten Teil der Fig. 5 ein Detail D dargestellt. Dieses zeigt in der Montagereihenfolge von Vorne nach Hinten eine erfindungsgemäße Verstellvorrichtung 1, dahinter den L-förmigen Querriegel 30 und weiter dahinter die Stütze 20, die mittels gemeinsamer Schrauben 40,50 in einer mittleren Montagestellung miteinander verschraubt sind. Werden die Schrauben 40,50 leicht gelöst oder sind diese noch nicht vollständig angezogen, so lässt sich die Verstellvorrichtung 1 drehen. Dabei kann bei einer Drehung der Scheibe 2 gegen den Uhrzeigersinn die Schraube 50 durch die mit einer Steuerkurve ausgebildete Ausnehmung 4 zwangsweise nach oben bewegt werden und dadurch der Abstand des Riegels 30 zur Stütze 20 stufenlos vergrößert werden. Dies wird dadurch bewerkstelligt, dass die Schraube 50 mit dem oberen Anschlag 55 des Loches 51 in einem Kraftschluß steht und beim Hochdrücken der Schraube 50 der Riegel 30 mitbewegt wird, während die Schraube 50 im Langloch 42 der Stütze 20 ungehindert in Achsrichtung M bewegt werden kann. Durch die Selbsthemmung wird dabei auch ein stabiler Zwischenzustand nach jeder Drehung der Scheibe erreicht und damit ein bequemes Einstellen möglich, ohne dass die Scheibe 2 verrutscht.

Bei einer Drehung in der umgekehrten Richtung lässt sich der entgegengesetzte Effekt erzielen. Je nachdem wie die Verstellvorrichtung 1 gedreht wird, kann dadurch das Höhenniveau des Riegels 30 stufenlos in Abhängigkeit vom möglichen Drehwinkel und der Langlochlänge zur Stütze 20 auf einfache Weise justiert oder korrigiert werden.

Fig.6 zeigt eine alternative Montageanordung eines ähnlich wie in Fig.2 dargestellten Montagesystems 100 mit einem darunter dargestellten Detail A. Auf dem Montagesystem 100 sind Solarpanele 200 angeordnet. Die Verstellvorrichtung 1 ist hier zwischen der U-Stütze 20 und dem U-Riegel 30 an deren Flachseiten 21,31 angeordnet. Die Höhenverstellung der Verstellvorrichtung 1 im Zusammenspiel mit den beschriebenen Lochbildern in der Stütze 20 und dem Riegel 30 läßt sich analog der zuvor beschriebenen Art und Weise anpassen.

Grundsätzlich lassen sich Montagesysteme mit mindestens zwei benachbarten Bauteilen nicht nur in der Höhe sondern auch in ihrem relativen Abstand zueinander bestimmungsgemäß einstellen. Insbesondere kann durch entsprechende Orientierung der Langlöcher in den Stützen 20 und den Riegeln 30 die gewünschte Dachneigung eingestellt werden, ohne dass es einer Anpassung der Verstellvorrichtung 1 bedürfte.

Durch die Ausgestaltung der Längen des spiralförmigen Langloch 4 und der beteiligten Langlöcher 42,52 lassen sich systemspezifische Einstellmöglichkeiten der beteiligten Bauteile erzielen.

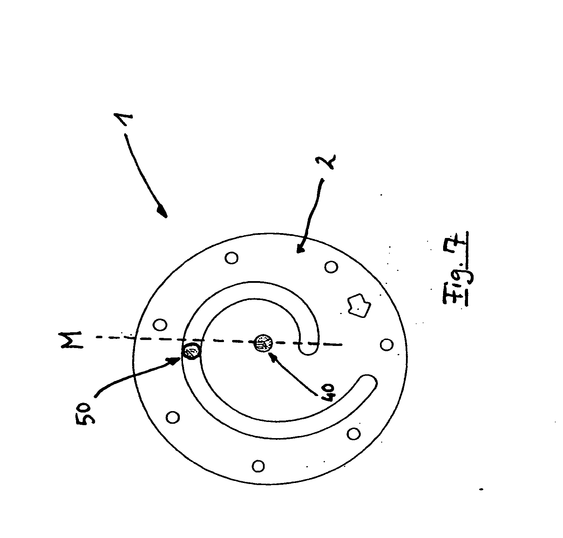

So kann wie beispielhaft in der Fig.7 gezeigt ist, die Symmetrieachse des oberen Langlochs versetzt zum Mittelpunkt des unteren Rundloches platziert werden, soweit wie der erforderliche Winkel für die Selbsthemmung nach wie vor erfüllt wird. In Fig. 7 liegt das Langloch nach links versetzt. Es ist daher kein zwingendes Erforderniss, dass das Rundloch auf der Langlochachse M angeordnet ist. So ergibt sich z.B. bei einem Reibwinkel von 0° eine Selbsthemmung .

### Bezugszeichenliste

- 1: Verstellvorrichtung
- 2: Scheibe
- 3: Öffnung
- 4: Ausnehmung
- 4a: Anfangspunkt der Steuerkurve/Ausnehmung
- 4b: Endpunkt der der Steuerkurve/Ausnehmung
- 6: Zentrum
- 7: Pol
- 11: innere Langlochseitenkante
- 12: äußere Langlochseitenkante
- 20: Bauteil
- 21: Flachseite
- 25: oberes Montageende
- 30: Bauteil
- 31: Flachseite
- 32: Flachseite
- 40: Verbindungsmittel
- 41: Befestigungsöffnung
- 42: Langloch
- 43: unteres Langlochende
- 44: oberes Langlochende
- 45: oberer Anschlag
- 46: unterer Anschlag
- 50: Verbindungsmittel
- 51: Befestigungsöffnung / Bohrung
- 52: Langloch
- 53: unteres Langlochende
- 54: oberes Langlochende
- 55: oberer Anschlag
- 56: unterer Anschlag
- 60: Werkzeugeingriffausnehmung
- 100: Montagesystem
- 200: Solarpanele
- M: Langlochachse / Mittelachse

## Patentansprüche

1. Verstellvorrichtung (1) zum Verbinden und zur stufenlosen Höhen- oder Abstandsjustage zweier mit Befestigungsöffnungen(41,42,51,52)versehener benachbarter Bauteile(20,30)mittels gemeinsamer Verbindungsmittel (40,50) bestehend aus
- einer im wesentlichen plattenförmigen Scheibe(2), die über eine Öffnung(3)für ein erstes Verbindungsmittel(40)und
- einer Ausnehmung(4)für ein zweites Verbindungsmittel (50)verfügt,
- wobei die Ausnehmung(4)als eine spiralförmige Ausnehmung in der Scheibe (2) mit einer Innenseitenkante (11) und einer Außenseitenkante(12)ausgebildet ist und
- die Öffnung (3) innerhalb des Zentrums (6) der spiralförmigen Ausnehmung (4) angeordnet ist, **dadurch gekennzeichnet, dass** die spiralförmige Ausnehmung (4) in der Form einer logarithmischen Spirale ausgebildet ist.

2. Verstellvorrichtung (1) gemäß Anspruch 1 **dadurch gekennzeichnet, dass** die spiralförmige Ausnehmung (4) als ein spiralförmiges Langloch (4) mit einer Langlochbreite (BS) in der Scheibe (2) ausgebildet ist und das Langloch (4) über eine innere Langlochseitenkante(11) und eine äußere Langlochseitenkante (12) verfügt, deren Abstand die Langlochbreite (BS) bestimmt.

3. Verstellvorrichtung (1) gemäß einem der Ansprüche 1 oder 2
**dadurch gekennzeichnet, dass** die Öffnung (3) als ein Loch mit einem Lochdurchmesser (DL) ausgebildet ist, dessen Lochmittelpunkt (ML) im Polpunkt(7) der spiralförmigen Ausnehmung (4) angeordnet ist.

4. Verstellvorrichtung (1) gemäß einem der vorhergehenden Ansprüche, dadurch gekenntzeichnet, dass ferner mindestens eine Werkzeugeingriffausnehmung (60) zum Eingriff eines Drehwerkzeuges vorgesehen ist, um die Verstellvorrichtung (1) in oder entgegen dem Uhrzeigersinn mittels des Werkzeuges drehen zu können.

5. Verstellvorrichtung (1) gemäß einem der vorhergehenden Ansprüche, **dadurch gekennzeichnet, dass** eine innere Langlochseitenkante (11) der spiralförmigen Ansnehmung (4) als Steuerkurve für die Lageverschiebung eines Verbindungsmittel (50) ausgebildet ist, derart dass beim Drehen der Verstellvorrichtung (1) eine vom Drehwinkel abhängige Lageverschiebung eines gleichzeitig durch die Ausnehmung (4) und durch ein in einem daran befestigten Bauteil (20) vorgesehenenen Langloch (42) vormontiertes gemeinsames Verbindungsmittel (50) entlang der Steuerkurve und damit im Langloch (42) erzwungen werden kann, derart dass infolge der Drehung dabei das Verbindungsmittel (50) im Langloch (42) je nach Drehrichtung zu dessen einen oder anderen Ende (43,44) in Achsrichtung (M) des Langloches (42) bewegt werden kann.

6. Verstellvorrichtung (1) gemäß einem der vorhergehenden Ansprüche, **dadurch gekennzeichnet, dass** die Scheibe (2) als eine kreisförmige Scheibe ausgebildet ist wobei die Öffnung (3) vom Kreismittelpunkt der Scheibe (2) versetzt angeordnet ist.

7. Verstellvorrichtung (1) gemäß einem der vorhergehenden Ansprüche für ein Verbindungsmittel(50) mit einem Durchmesser (DS) **dadurch gekennzeichnet, dass** die Ausnehmung (4) über eine im wesentlichen konstante Breite verfügt, die dazu vorgesehen ist, ungefähr dem Durchmesser (DS) zu entsprechen und wobei ein Reibwinkel (α) zwischen einem Verbindungsmittel (50) und der inneren Langlochseitenkante (11) derart besteht, dass die Bedingung der Selbsthemmung erfüllt ist.

8. Montagesystem (100) umfassend
- ein erstes Bauteil (20) mit ersten Befestigungsöffnungen (41,42)
- ein zweites Bauteil (30) mit zweiten Befestigungsöffnungen (51,52)
- sowie eine Verstellvorrichtung(1)gemäß einem der Ansprüche 1-7, zur Verbindung und zur stufenlosen Höhen- oder Abstandsjustage der Bauteile (20,30) mittels gemeinsamer Verbindungsmitteln (40,50), wobei mindestens je eines der ersten Befestigungsöffnungen (41,42) und der zweiten Bestigungsöffnungen (51,52) als ein Langloch ausgebildet ist.

9. Montagesystem (100) gemäß Anspruch 8 **dadurch gekennzeichnet, dass** mindestens eines der Bauteile (20, 30) über ein Langloch und eine dazu beabstandet angebrachte mit dem Langloch auf einer gemeinsamen Langlochachse (M) liegende vorzugsweise runde Befestigungsöffnung (41,51) verfügt, wobei die Befestigungsöffnung (41,51) über je einen oberen und unteren Anschlag (45,46,55,56) für ein Befestigungsmittel (40,50) innerhalb der gemeinsamen Langlochachse (M) verfügt.

10. Montagesystem (100) gemäß Anspruch 9, wobei der Abstand des Langlochs (42, 52) zur Befestigungsöffnung (41,51) dem kürzesten Abstand der Ausnehmung (4) zwischen deren Anfangspunkt (4a) und deren zentraler Öffnung (3) entspricht.

## Claims

1. Adjusting device (1) for connecting and for adjusting infinitely variable the height and the distance of two adjacent components (20,30) provided with fastening apertures (41,42,51,52) by means of common connecting means (40,50) consisting of
- a substantially plate-shaped disc (2) provided with an opening (3) for a first connecting means (40) and
- a recess (4) for a second connecting means (50),
- wherein the recess (4) is formed as a spiral-shaped recess in the disc (2) having an inner side edge (11) and an outer side edge (12) and
- the opening (3) is arranged within the center (6) of the spiral-shaped recess (4), **characterized in that** the spiral-shaped recess (4) is formed in the form of a logarithmic spiral.

2. Adjusting device (1) according to claim 1, **characterized in that** the spiral-shaped recess (4) is formed as a elongated hole (4) having a slot width (BS) in the disc (2) and the elongated hole (4) have an inner slot side edge (11) and an outer slot side edge (12) with an distance determining the slot width (BS).

3. Adjusting device (1) according to any one of claims 1 or 2 **characterized in that** the opening (3) is formed as a hole with a hole diameter (DL), whose hole center (ML) is arranged in pole point (7) of the spiral-shaped recess (4).

4. Adjusting device (1) according to one of the preceding claims, **characterized in that** furthermore at least one tool recess (60) for engagement of a turning tool is provided to rotate the adjusting device (1) in or counter-clockwise by means of the tool.

5. Adjusting device (1) according to one of the preceding claims, **characterized in that** a inner slot side edge (11) of the spiral-shaped recess (4) is formed as a cam in order to shift the position of a connecting means (50) in such a way that upon rotation of the adjusting device (1) an angle of rotation dependent position shift of a pre-assembled joint connecting means (50) can be enforced along the cam und thus in the elongated hole (42) when the joint connecting means (50) is attached simultaneously into the recess (4) and into a provided elongated hole (42) of an attached component (20) in such that due to the rotation the connecting means (50) in the elongated hole (42) can be moved to the one or the other end (43,44) in the axial direction M of the slot (42) depending on the direction of rotation.

6. Adjusting device (1) according to one of the preceding claims, **characterized in that** the disc (2) is formed as a circular disc wherein the opening (3) is arranged at an offset from the circle center of the disc (2).

7. Adjusting device (1) according to one of the preceding claims, for a connecting means (50) having a diameter (DS) **characterized in that** the recess (4) has a substantially constant width which corresponds approximately to the diameter (DS) of the connecting means (50) and wherein therefore a friction angle [α] between a connecting means (50) and the inner edge (11) of the elongated-hole is such that the condition of self-locking is satisfied.

8. Mounting system (100) comprising
- a first member (20) with first fastening openings (41,42)
- a second member (30) with second fastening openings (51,52)
- as well as an adjusting device (1) according to any one of claims 1-7 for connecting and for adjusting infinitely variable the height and the distance of two adjacent components (20,30) by means of common connecting means (40,50) wherein at least one of the first fastening openings (41,42) and at least one of the second fastening openings (51,52) is formed as an elongated hole.

9. Mounting system (100) according to claim 8 **characterized in that** at least one of the components (20,30) has an elongated hole and a spaced preferably round fastening opening (41,51) lying with the elongated hole on a common elongated hole axis (M), wherein the fastening opening (41,51) has a respective upper and lower stop (45,46,55,56) for a fastening means (40,50) within the common elongated hole axis (M).

10. Mounting system (100) according to claim 9, wherein the distance of the slot (42,52) to the fastening opening (41,51) corresponds to the shortest distance of the recess (4) between its starting point (4a) and their central opening (3).

## Revendications

1. Adjustment (1) pour la connexion et pour la fixation infiniment variable la hauteur et la distance de deux composants adjacents (20,30) formées avec des ouvertures de fixation (41,42,51,52) par des moyens de fixation communs (40,50) consistant de
- un disque (2) substantiellement en forme de plaque par l'intermédiaire d'une ouverture (3) pour un premier moyen de liaison (40) et
- un évidement (4) présente pour un second moyen de connexion (50),
- dans lequel l'évidement (4) est formée comme un évidement en forme de spirale dans le disque (2) ayant un bord latéral intérieur (11) et un bord latéral extérieur (12) et
- l'ouverture (3) est agencé dans le centre (6) de l'évidement en forme de spirale (4) **caractérisé en ce que** l'évidement en forme de spirale (4) est formée sous la forme d'une spirale logarithmique

2. Adjustment (1) selon la revendication 1, **caractérisé en ce que** l'évidement en forme de spirale (4) est formée comme un trou allongé (4) ayant une largeur de fente (BS) dans le disque (2) et le trou allongé (4) a un bord interne fente latérale (11) et un bord externe fente latérale (12) avec une distance de la détermination de la largeur de la fente.

3. Adjustment (1) selon l'une quelconque des revendications 1 ou 2, **caractérisé en ce que** l'ouverture (3) est formé comme un trou avec un diamètre de trou (DL), dont le trou central (ML) est disposé au point polaire (7) de l'évidement en forme de spirale (4).

4. Adjustment (1) selon l'une quelconque des revendications précédentes, **caractérisé en ce que** de plus au moins un évidement d'outil (60) pour l'engagement d'un outil de tournage est prévu pour faire tourner le dispositif de réglage (1) dans ou contre-aiguilles d'une montre au moyen de l'outil.

5. Adjustment (1) selon l'une quelconque des revendications précédentes, **caractérisé en ce que** un bord interne fente latérale (11) de l'évidement en forme de spirale (4) est réalisé sous la forme d'une came afin de déplacer la position d'un moyen de connexion (50) de telle manière que lors de la rotation d'adjustment (1) un angle de décalage de position de rotation dépendante d'un pré-assemblés moyens d'articulation de liaison (50) peut être appliquée le long de la came et ainsi dans le trou allongé (42) lorsque le commun moyen de connexion (50) est fixé en même temps dans l'évidement (4) et dans un trou allongé (42) prévu d'un élément attaché (20) de telle qu'en raison de la rotation du moyen de connexion (50) dans le trou allongé (42) peut être déplacé vers l'une ou l'autre extrémité (43,44) dans le sens axial (M) de la fente (42) selon du sens de rotation.

6. Adjustment (1) selon l'une quelconque des revendications précédentes, **caractérisé en ce que** le disque (2) est formé comme un disque circulaire dans lequel l'ouverture (3) est disposé à un offset à partir du centre du cercle du disque (2).

7. Adjustment (1) selon l'une quelconque des revendications précédentes, pour un moyen de connexion (50) ayant un diamètre (DS) **caractérisé en ce que** l'évidement (4) a une largeur substantiellement constante qui correspond approximativement au diamètre (DS) des moyens de connexion (50) et dans lequel donc un angle de friction [α] entre un moyen de connexion (50) et le bord intérieur (11) du trou allongé est telle que la condition d'auto-verrouillage est satisfaite.

8. Système de montage (100) comprenant
- un premier élément (20) avec des premières ouvertures de fixation (41,42)
- un second élément (30) avec des deuxièmes ouvertures de fixation (51,52)
- ainsi que un ajustment (1) selon l'une quelconque des revendications 1-7 pour la connexion et pour le réglage de la hauteur variable à l'infini et la distance de deux éléments espacés (20,30) par des moyens de connexion communs (40,50) dans lequel au moins l'une des premières ouvertures de fixation (41,42) et au moins l'une des deuxièmes ouvertures de fixation (51,52) est formé comme un trou allongé.

9. Système de montage (100) selon la revendication 8, **caractérisé en ce qu'**au moins un des composants (20,30) a un trou allongé et un interlinge ouverture de préférence ronde de fixation (41,51) située sur un axe commun (M) avec le trou allongé, dans lequel l'ouverture de fixation (41,51) possède une butée respective supérieure et inférieure (45,46,55,56) pour un moyen de connexion (40,50) à l'intérieur de l'axe commun (M).

10. Système de montage (100) selon la revendication 9, dans lequel la distance de la fente (42,52) à l'ouverture de fixation (41,51) correspond à la distance la plus courte de l'évidement (4) entre son point de départ (4a) et leur ouverture centrale (3).
